# EUROPEAN PATENT SPECIFICATION

(11) **EP 3 022 495 B1**
(45) Date of publication and mention of the grant of the patent: **15.10.2025**
(21) Application number: 14742146.5
(22) Date of filing: 14.07.2014
(51) Int. Cl.: F24F 5/00, F28D 20/00

(54) **A SYSTEM FOR COOLING OF BUILDINGS AND FOR HEATING USING RECYCLED HEAT ENERGY FROM A SEDIMENTATION TANK**
SYSTEM ZUM KÜHLEN VON GEBÄUDEN UND ZUM ERHITZEN UNTER VERWENDUNG VON WÄRMEENERGIE AUS EINEM ABSETZBECKEN
SYSTÈME DE REFROIDISSEMENT DE BÂTIMENTS ET DE CHAUFFAGE FAISANT APPEL À UNE ÉNERGIE THERMIQUE RECYCLÉE PROVENANT D'UN BASSIN DE DÉCANTATION

(30) Priority: 14.07.2013 DK 201300426
(43) Date of publication of application: 25.05.2016
(73) Proprietor: RecyclingWell ApS, 7400 Herning (DK)
(72) Inventor: Klausen, Mikael, 7400 Herning (DK)
(74) Representative: Høiberg P/S
(86) International application number: PCT/DK2014/050222
(87) International publication number: WO 2015/007292

(56) References cited:
- EP-A2- 2 336 700
- DE-U1- 202004 006 853
- US-A- 3 236 294
- US-A- 3 996 759
- US-A1- 2012 227 926

## Description

The present invention relates to a system for cooling and/or heating of a liquid in a closed liquid/liquid heat exchanger system, the system comprising a sedimentation tank for detaining through-flowing water in the form of wastewater or rainwater.

### Background of the invention

Until the recent years, there has been no significant need for cooling of residential buildings in areas with temperate climate, such as for instance in Denmark. A result of tightening of building regulations, for instance with respect to heat losses and better and tighter building constructions, however, is that overheating of buildings outside the heating season is an increasing problem.

Due to architectural trends, a desire for modern expression and the wish for getting as much daylight into the buildings as possible, many new buildings are equipped with large glass panels. Such large glass panels, especially if faced southwards, significantly reduces the energy consumption of the buildings, the passive solar heating contributing freely to the heating of buildings during the heating season.

Outside the heating season, however, this passive solar heating can cause even severe overheating problems during periods, in which no energy supply for heating is needed. Due to the often heavy insulation of the buildings, it can be difficult or, in some cases, even impossible to control and regulate the temperature inside the buildings.

Today, cooling is mainly achieved by cooling the air through air conditioning powered by electricity. Air conditioning is relatively expensive and further related to known nuisances, such as draught, fluctuating temperatures and fouling of the equipment. At the same time, the energy labelling of the building is negatively impacted by a large electricity consumption for cooling.

Blocking the solar radiation from entering the building is another effective method for limitation of the overheating of residential buildings. It may be in the form of overhangs, awnings or shutters preventing the sunrays from penetrating the windows, thus keeping the solar radiation out of the building and reducing the overheating.

In many architectural traditions, such as for instance the Danish, shutters and awnings are not normally used for "cooling" and the overhangs of the new buildings are typically smaller than the ones of older buildings, so not much shade in the form of shielding from the sun is achieved.

New systems are arriving, in which the cooler temperature of the ground around the building is used for cooling the building using geothermal heat pipes, and still more attention is focused on this field.

Due to contamination risks, however, geothermal heating systems, which are intended to be established in groundwater sensitive areas, may be refused by the municipality authorities. Furthermore, lots that are too small or generally lay in the shadow do not have optimal conditions for geothermal heating. Other problems may be that the soil is very sandy and has poor heat-conductive characteristics or that, for instance in forestland, many roots in the ground prevent the necessary burying of several hundred meters of water hose.

Apart from the fact that many sewerage systems are old and worn down, the reduction of the amounts of water used, for instance, when toilets are flushed, results in increasing problems with clogging of the drainage network. Preferably, rainwater should not be led through wastewater treatment plants, but if the rainwater is necessary to "carry" the heavier wastewater through, or if the sewage and the rainwater simply run in the same sewer lines, the rainwater may be used to flush the sewers through. In many cases, the sewage is lifted by a number of pumping stations on its way to the wastewater treatment plant, the pumps of which pumping stations must be able to handle everything thrown into the sewer.

US 2012/227926 A1 discloses an energy storage system and the use of energy storable material such as phase change material in the provision of heating and/or cooling systems.

DE 20 2004 006853 U1 discloses a climate system for a building with a heat exchanger in a rain water cistern.

EP 2 336 700 A2 discloses a storage tank for temporary storage of heat energy.

### Brief description of the invention

The present invention discloses a system for cooling and/or heating of a liquid in a closed liquid/liquid heat exchanger system, the system comprising a sedimentation tank for detaining through-flowing water in the form of wastewater or rainwater, wherein a natural thermal stratification in the sedimentation tank is utilised by means of an upper coil, an intermediate coil and a lower coil, which are placed in different horizontal layers of the sedimentation tank, respectively, and each contains a liquid in the form of tap water, demineralised water or water mixed with a coolant, wherein the system can be configured in different ways so that, in a first configuration of the system, each of the three coils is arranged to exchange heat energy between the water in the sedimentation tank and the liquid inside the coil separately and independently of the other coils, in a second configuration of the system, in order to obtain a larger coil length and, thereby, a longer time for exchanging heat energy with the water near the top of the sedimentation tank or with the water near the bottom of the sedimentation tank, two of the three coils are arranged in continuation of one another by connecting the intermediate coil either to the upper coil or to the lower coil, and in a third configuration of the system, all three coils are arranged in continuation of one another by connecting the intermediate coil both to the upper coil and to the lower coil so that the same liquid flows through all three coils, and wherein, in the first and second configurations of the system, it is configured to be able to heat a liquid flowing upward through the upper coil and, at the same time, cool another liquid flowing downward through the lower coil using the same environment.

An advantage of the invention over the prior art is the utilization of the natural thermal stratification of the water in the sedimentation tank. The built-in coils can be used independently or they can be connected to form extensions of one another.

It is a further advantage of the invention that heat energy can be "harvested" from the upper coil, at the same time increasing the ability of the invention to cool liquid flowing through the lower coil. Thus, the limitation of the prior art to either cooling or heating has been eliminated by the present invention, which is able to do both at the same time using the same environment.

It is also advantageous that the coils in the sedimentation tank are protected, for instance against sharp stones being displaced in the soil. This also eliminates the risk of leakage by accidental excavations.

Furthermore, it is advantageous that energy can be supplied actively to the system during the heating season, whereas systems known in the art can only be energized slowly by being heated by the sun.

In an embodiment of the invention, a cooling control unit is arranged to receive a signal representing a need for cooling of a building or a part of a building and to control the system in accordance with the received signal, so that, in case of a limited need for cooling, liquid is led through the lower coil for being cooled by the surrounding water in the sedimentation tank and afterwards passed through the cooling control unit to a supply pipe for a cooling circuit inside the building to be cooled, and, in case the need for cooling is larger, the intermediate coil and the lower coil are connected to each other, and liquid is led through the intermediate coil and further through the lower coil for being cooled by the surrounding water in the sedimentation tank and afterwards passed through the cooling control unit to a supply pipe for a cooling circuit inside the building to be cooled, in both of which cases, the liquid flowing in the cooling circuit provides cooling to the building by absorbing heat energy from the building, which heat energy is, in turn, released to the water in the sedimentation tank when the liquid returns thereto from the cooling circuit.

It is advantageous for the operation of the system that the temperature near the bottom of the sedimentation tank is cooler in the summer than in conventional ground heating pipes for cooling. Because the cooling effect is higher due to the lower temperatures, less liquid needs to be pumped through the system than in other cooling systems known in the art.

Furthermore, it is an advantage that the coils are placed in water, which has a higher thermal conductivity than soil and therefore absorbs heat energy from the coils faster than is the case in systems known in the art. The heat energy absorbed by the water when cooling the liquid inside the lower coil ascends within the sedimentation tank and can be used for heating liquid inside the upper coil, which affects the cooling efficiency positively.

In an embodiment of the invention, a distribution shunt is arranged to receive a signal from a control unit, which signal indicates whether a liquid to be received by a heat pump should be passed through the upper coil alone, the intermediate coil and the upper coil being connected to each other, or the lower coil, the intermediate coil and the upper coil, the intermediate coil connecting the lower coil and the upper coil, for being heated by the surrounding water in the sedimentation tank before reaching the heat pump, the control unit using measurements by a second, a third and a fourth temperature sensor detecting the water temperatures in different thermal layers, respectively, of the sedimentation tank for controlling the distribution shunt and, thereby, through how many of the coils the liquid must flow in an upward direction in order to absorb as much heat energy as possible from the water in the sedimentation tank while at the same time avoiding any unnecessary cooling of the water in the sedimentation tank by the liquid returning from the heat pump.

It is advantageous that the distribution shunt ensures that as high temperature as possible of the liquid for the heat pump, which comes from the coil in the sedimentation tank is obtained.

Traditional geothermal system and known systems with liquid/liquid heat exchangers cannot affect the temperature of the liquid, which is solely determined by external factors, such as for instance the ground temperature.

In an embodiment of the invention, a disposable shunt is arranged to be used for cooling of liquid from external devices, such as solar cell coolants or return water from solar heating or district heating systems, by letting the liquid flow through a disposable coil in a downward direction, provided that the temperature measured by the second temperature sensor is lower than the temperature of the liquid in the disposable coil, which is measured in the disposable shunt.

An advantage over the prior art is almost unlimited cooling resources and the use for heating of the heat energy left in the sedimentation tank by the cooling.

In an embodiment of the invention, provided that a temperature below +4 degrees centigrade is measured by the third temperature sensor, a liquid is led from a hot-water tank, through a supply pipe for a heat exchanger, through the heat exchanger and in a downward direction through the lower coil for releasing heat energy to the colder surrounding water in the sedimentation tank before it returns to the hot-water tank.

The invention takes into account the variations that are associated with a system whose energy supply and consumption depend on the usage patterns related to a specific building. The system also includes a frost protection.

It is advantageous that, in most cases, electric heating of the water in a hot-water tank connected to the system is not needed, as electric heating is significantly more expensive than heat pump operation only.

Advantageously, the frost protection is only operated in period, when no hot water is used, such as for instance if the family living in the building is on vacation. It is not good for hot water to "stand still", but operation of the frost protection system keeps the water in the hot-water tank moving. There will be no shortage in the capacity of domestic hot water, because the family is not at home.

In an embodiment of the invention, the system further comprises a clarification well with a first and a second built-in T-piece outlet valve, which valves are arranged to be used for controlling whether the water from the clarification well is to leave the sedimentation tank via a long outlet pipe or via a short outlet pipe, respectively, before reaching a sewage outlet.

It is an advantage over the prior art that the use of the temperature stratification in the sedimentation tank is optimised. The efficiency of cooling is increased the outside the heating season and heat accumulation is optimised during the heating season. The built-in clarification well improves advantageously the wastewater treatment.

In an embodiment of the invention, the system further comprises a first temperature sensor for obtaining an optimal distribution of the wastewater entering the sedimentation tank, wherein, in case the temperature measured by the first temperature sensor is higher than the temperature measured by the second temperature sensor, a sewer bypass closes for a T-piece for a first inlet and the wastewater is led to a T-piece for a second inlet for entering the inside of the sedimentation tank through the second inlet, whereas, in case the temperature measured by the first temperature sensor is lower than the temperature measured by the second temperature sensor, the sewer bypass opens for the T-piece for the first inlet and the wastewater is led to the inside of the sedimentation tank through the first inlet.

Thus, the distribution of temperatures and heat energy in the sedimentation tank is optimised so that the operation of the system during the heating period as well as outside the heating season is as effective as possible. In addition, the efficiency of cooling outside the heating season is enhanced and the use of the heat energy from the wastewater during the heating season is optimised.

In an embodiment of the invention, the liquid flowing through the upper, the intermediate, the lower and/or the disposable coil contains an antifreeze/coolant diluted with tap water or demineralised water or tap water.

Demineralised water and tap water have high heat capacities, meaning that less liquid needs to be pumped through the system in order to transport the same amount of heat energy than if other liquids are used.

It is also beneficial for the environment to use demineralised water or tap water, which does not pose a pollution hazard in the event that the system should be leaking.

In an embodiment of the invention, the upper coil is arranged to be used as a preheating circuit for cold tap water by means of a preheating unit connected to a tap water conduit, so that the cold tap water can be led in an upward direction through the upper coil for absorbing heat energy from the surrounding water in the sedimentation tank before being sent as preheated tap water through a supply pipe for a heating system of a building.

Thus, if a heat pump is not used for heating, this invention can contribute to savings by pre-heating cold tap water. This is advantageous in that the heating and hot-water consumption may be reduced, for instance by operating, for instance, dishwashers and washing machines with preheated tap water instead of cold tap water.

It is a further advantage that, in the long term, this aspect of the invention can be used for preheating all the hot water used in the home.

### The drawing

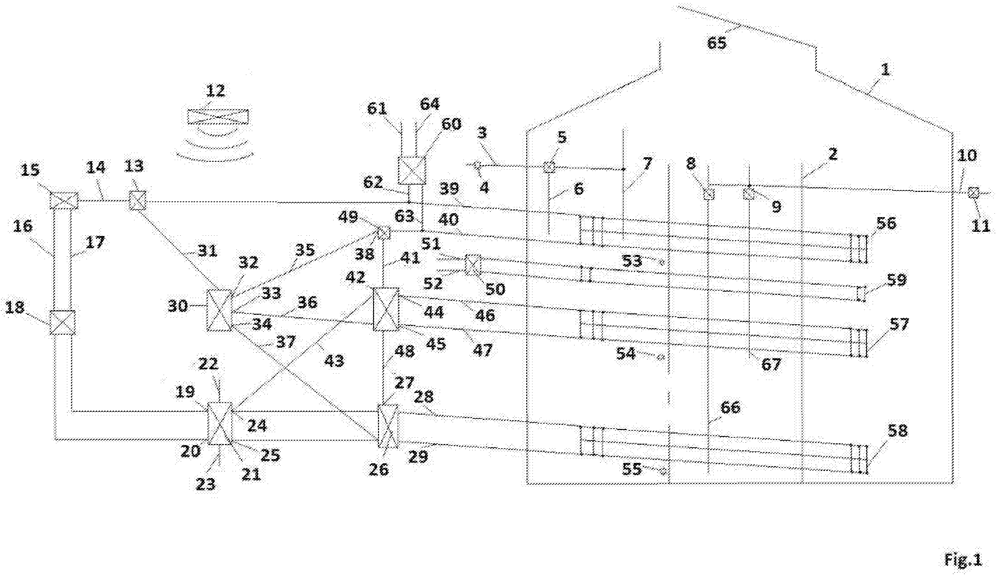

In the following, a few exemplary embodiments of the invention are described in more detail with reference to
- Fig. 1: which illustrates schematically a system for cooling a liquid in a closed liquid/liquid heat exchanger system according to an embodiment of the invention.

### Detailed description of the invention

The invention is based on the idea of exploiting the natural thermal stratification of nearly stagnant water collected in a sedimentation tank 1. In this case, water should be understood as either sewage/wastewater or rainwater. The stratification ensures that the coldest water, which may be used for cooling, is found near the bottom of the sedimentation tank 1, whereas the warmer water, which may be used for heating, is found near the top of the sedimentation tank 1.

The embodiment of the system, which is described in the following, comprises a buried sedimentation tank 1, which is constructed with a cleaning hatch or manhole 65 at the top for maintenance and emptying, a number of built-in hoses or tubes in the form of coils 56, 57, 58, 59 for simultaneous cooling and heating of liquid in a closed liquid/liquid heat exchanger system. In this case, liquid should be understood as tap water, demineralised water or tap water containing a coolant or an antifreeze.

A few examples of different ways, in which heat energy may be supplied to the sedimentation tank 1:
- Returning coolant from a building cooling system (at least 20° C)
- A WC flush containing faeces/urine (20-30° C) (S)
- Wastewater from a colour wash (40° C). (G)
- Wastewater from a shower contributes (37-40° C) (G)
- Cold tap water (6-8° C) (G)
- Wastewater from a drain in a kitchen sink (up to 95° C) (G)
- Wastewater from a hot wash in the washing machine (90° C) (G)

(G) indicates so-called "grey wastewater".
(S) indicates so-called black water, which can be separated from the remainder before reaching the sedimentation tank 1.

The temperature of the water in the sedimentation tank 1 is stratified, which means that there will always be warmer water near the top and colder water near the bottom of the sedimentation tank 1, which makes it possible to transfer otherwise non-usable heat energy (typically from heating or cooling systems) back to a circuit.

It is also possible to simultaneously cool and heat using the same "environment". For instance, some people might like to have a "cold" bedroom and/or a cool larder with a constant temperature all year round, but also to have heated bathroom floors. Known systems within the field produces either heating or cooling by means of conventional geothermal systems.

The built-in hoses/tubes are formed as coils 56, 57, 58, 59. More coils can be installed, but basically there is a coil 58 in the lower part of the sedimentation tank 1, the purpose of which is to cool a liquid flowing through the coil 58, and a coil 56 in the upper part of the sedimentation tank 1, the purpose of which is to heat a liquid flowing through the coil 56.

The liquid in the cooling coil, which is the lower coil 58, gives off heat energy to the water in the sedimentation tank 1, which heat energy can be collected, for instance, by cooling a building part. The lower coil 58 extends in a downward direction along a spiral path from the centre of the sedimentation tank 1 toward the wall of the sedimentation tank 1.

The "connecting coil", which is the intermediate coil 57, can be used for extending either the lower coil 58 or the upper coil 56 or for connecting the lower coil 58 and the upper coil 56 to each other if more heating or cooling capacity is needed.

The heating coil, which is the upper coil 56, the liquid inside which is to absorb heat energy from the surrounding water in the sedimentation tank 1, extends in an upward direction along a spiral path from the wall of the sedimentation tank 1 toward the centre of the sedimentation tank 1.

Household wastewater is led to the sedimentation tank 1. (Rainwater can also be used, but only for cooling purposes.)

If the supplied wastewater has a higher temperature than the current temperature at the centre of the sedimentation tank 1, the wastewater is supplied to the sedimentation tank 1 near the centre thereof. If, on the other hand, the temperature of the supplied wastewater is lower than the current temperature at the centre of the sedimentation tank 1, the wastewater is supplied to the sedimentation tank 1 near the inside of the walls thereof.

The aim is to support the natural thermal stratification process creating the highest temperature at the centre and near the top of the sedimentation tank 1 and the lowest temperature near the bottom of the sedimentation tank 1. Not all of the wastewater is necessarily led through the sedimentation tank 1.

In the event that the sedimentation tank 1 is not a part of an actual cleaning process for the wastewater, for instance if the building is connected to a wastewater treatment plant, the "black water", for instance from toilet flushing, can be separated from the remainder and be led directly to the sewer without passing through the sedimentation tank 1. In such cases, the time interval between subsequent emptying and cleaning of the system increases significantly.

If the supplied wastewater is too cold, it is also possible to separate the wastewater from the reminder before it reaches the sedimentation tank 1 by means of a thermostatically controlled valve arranged to lead the wastewater around the sedimentation tank 1 instead of into it.

The illustrated embodiment of the system shows a system for the optimal distribution of the wastewater flowing into the sedimentation tank 1 so that the water with the highest temperature is centred in the sedimentation tank 1, and a slightly lower water temperature is accepted along the wall of the sedimentation tank 1. This is achieved by means of two T-pieces 6, 7 leading the wastewater from a sewage inlet 3 to a first or a second inlet, respectively. A sewer bypass 5, controls the flow of wastewater through the two T-pieces depending on the temperature of the wastewater, which is measured by a first temperature sensor 4.

If the temperature measured by the first temperature sensor 4 is higher than the temperature measured by a second temperature sensor 53 placed inside the sedimentation tank1, the sewer bypass 5 closes for the T-piece 6 for the first inlet and the wastewater is led to the T-piece 7 for the second inlet. The wastewater enters the inside of the sedimentation tank 1 through the second inlet, which leads to the centre part of the sedimentation tank 1. Thus, the warm wastewater contributes to an increase of the temperature near the centre of the sedimentation tank 1.

If, on the other hand, the temperature measured by the first temperature sensor 4 is lower than the temperature measured by the second temperature sensor 53, the sewer bypass 5 opens for the T-piece 6 for the first inlet. The wastewater enters the inside of the sedimentation tank 1 through the first inlet, which leads to a more peripheral part of the sedimentation tank 1. Thus, the colder wastewater does not negatively influence the temperature near the centre of the sedimentation tank 1.

The water level in the sedimentation tank 1 is regulated continuously. As new wastewater is supplied to the upper part of the sedimentation tanks 1, a similar amount of wastewater leaves the centre or the lower part of the sedimentation tank 1 through a clarification well 2.

The illustrated embodiment of the system comprises a clarification well 2 with a first 8 and a second 9 T-piece outlet valve connection a long outlet pipe 66 and a short outlet pipe 67, respectively, to a sewage outlet 10. The use of a long 66 and a short 67 outlet pipe makes it possible to regulate the vertical position in the clarification well 2 from which the wastewater is to leave the sedimentation tank 1 through a sewage outlet 10. The clarification well 2 and/or the long 66 and short 67 outlet pipes are normally insulated.

If a cooling control unit 21 is activated by a control unit 12 and the intermediate coil 57 and/or the lower coil 58 are used for cooling, the second T-piece outlet valve 9 is open and the first T-piece outlet valve 8 is closed. In this way, water leaves the sedimentation tank 1 from a relatively high vertical position within the clarification well 2 via the short outlet pipe 67 and as much cold water as possible near the bottom of the sedimentation tank 1 is kept therein. This will typically be the mode of operation outside the heating season when cooling is more needed than heating and as low a temperature as possible is desired within the sedimentation tank 1.

If, on the other hand, the cooling control unit 21 is not activated 12 and the upper coil 56 and/or the intermediate coil 57 and/or the lower coil 58 are used for heating, the second T-piece 9 outlet valve 9 is closed and the first T-piece outlet valve 8 is open. In this way, water leaves the sedimentation tank 1 from the bottom of the clarification well 2 via the long outlet pipe 68. This means that the coldest water leaves the sedimentation tank 1, which is typically the mode of operation within the heating season when heating is more needed than cooling and as high a temperature as possible is desired within the sedimentation tank 1.

Furthermore, the arrangement in relatively low vertical positions of the long 66 and short 67 outlet pipes within the clarification well 2 protects against sludge bulking and enables for construction of a large floating layer.

The illustrated embodiment shows a system for cooling a liquid in a closed liquid/liquid heat exchanger system. The system includes a sedimentation tank 1 for wastewater or rainwater having a sewage inlet 3 and a sewage outlet 10 via a clarification well 2. The clarification well comprises a first 8 and a second 9 T-piece outlet valve.

The liquid flowing through the lower coil 58 may be a coolant from a cooling circuit (not shown). Via a return pipe 22 from the cooling circuit, the coolant continues through a 3-way valve 24 of a cooling control unit 21, a 2-way valve 27 of a cooling shunt 26 and a supply pipe 28 to the lower coil 58 where it is cooled by releasing heat energy to the surrounding cold water near the bottom of the sedimentation tank 1. From the lower coil 58, the cooled liquid returns via a return pipe 29, the cooling shunt 26, a 2-way valve 25 of the cooling control 21 and a supply pipe 23 to the cooling circuit for providing cooling. When the system is used for cooling, a valve 34 for a second cooling/heating circuit is closed.

If the control unit 12 sends a signal that the cooling need increases, the cooling control 21 unit directs the liquid to the intermediate coil 57 via the 3-way valve 24 of the cooling control, a supply pipe 43, a first 3-way valve 44 of a cooling/heating shunt 42 and a supply pipe 46. From the intermediate coil 57, the cooled liquid continues via a return pipe 47, a second 3-way valve 45 of the cooling/heating shunt 42, a connection 48 between the cooling/heating shunt 42 and the cooling shunt 26, the 2-way valve 27 of the cooling shunt 26 and the supply pipe 28 to the lower coil 58 for further cooling. From the lower coil 58, the liquid returns to the cooling circuit following the same path as described above. Thus, the cooling surface, i.e. the surface of the coils 57, 58 through which heat energy is released, the time spent by the liquid passing through the coils 57, 58 within the coldest parts of the sedimentation tank 1 and, thereby, the cooling effect are increased by using both the intermediate coil 57 and the lower coil 58 for cooling instead of only the lower coil 58.

When using two coils 57, 58 for cooling, two valves 33, 34 for a first and a second cooling/heating circuit, respectively, and a connection 41 between a heating shunt 49 and the cooling/heating shunt 42 are all closed. The first T-piece outlet valve 8 is closed and the second T-piece outlet valve 9 is open so that the water leaving the sedimentation tank 1 passes through the short outlet pipe 67 and the sewage outlet 10.

The sedimentation tank 1 is equipped with a disposable shunt 50 with an associated disposable coil 59, which can be used, for example, for cooling of liquid from external devices, such as solar cell coolants or return water from solar heating or district heating systems. Thus, the disposable shunt 50 can be connected via a supply pipe 51 and a return pipe 52 to a number of different external units (not shown) for leading liquids flowing through these units to the disposable coil 59 for being cooled. These liquids are typically relatively warm, and the control unit 12 makes sure that cooling using the disposable coil 59 is only performed when the temperature measured by the second temperature sensor 53 placed centrally in the sedimentation tank 1 is, in fact, lower than the temperature of the liquid to be cooled, which is measures within the disposable shunt 50.

In case black wastewater flows through the sedimentation tank 1, the system can contribute to the relief of the established sewer system as the black water is no longer lead the directly to the sewage network. Instead, it sediments and settles as floating layer and ooze in the sedimentation tank 1. Thus, the wastewater leaving the sedimentation tank 1 is in pure liquid form without the impurities normally removed in wastewater treatment plants using a lot of resources or using large grates or grid in the sewage network, which must regularly be emptied.

Hence, there are similarities to percolation systems for wastewater as are known from rural buildings but the wastewater is not percolated like in the countryside but is still led to wastewater treatment plants as it was before - only without the abovementioned "impurities".

The disadvantage of using such sedimentation tanks 1 in urban areas is, of course, that they need to be emptied occasionally. Because they do not themselves have a primary cleaning effect, an emptying every one to two years normally suffices. Due to the abovementioned properties of the sedimentation tank 1, it is only the ooze and the floating layer, and not the water therein, that must be removed by vacuum tanker. Preferably, the emptying of the sedimentation tank 1 should take place outside the heating season.

If only the grey water flows through the sedimentation tank 1, an emptying every 3th-5th years should suffice, meaning less discomfort associated with emptying the sedimentation tank 1. In this case, the pump stations of the sewerage system are relieved because, essentially, only water has to be transported. The wastewater leaving the sedimentation tank 1 contains only a few fragments that can cause blockages in the sewerage system.

There is less food for rats. Rats are good swimmers, but the path into the building via the sewer is made more difficult because the rats now have to swim through the long 66 or short 67 outlet pipe in the clarification well 2 just to get into the sedimentation tank 1. If an approved mechanical rodent control device is installed in the sedimentation tank 1 for the controlling the rats, the dead rats will float around inside the sedimentation tank 1, until it is emptied. In this way, the sedimentation tank 1 contributes to rat control in sewers, and the dead rats will not end up as food for scavengers in the sewerage system.

The coils 56, 57, 58, 59 being protected by being embedded in a sedimentation tank 1, the pollution hazard related to adding coolants or antifreezes to the liquid flowing in the coils 56, 57, 58, 59 is significantly reduced.

The system is designed as a "pipe-in-pipe" system with the associated control of pressure drops and drainages. If one of the coils 56, 57, 58, 59 should leak, the control unit 12 will register a pressure drop in the system and a safety valve 11 arranged on the sewage outlet 10 will close and stop the flow through the sedimentation tank 1, and a system error alarm will be given by the control unit 12 in order to prevent any contaminated wastewater form leaving the system.

The coils 56, 57, 58, 59 are not exposed to any abrasion or impact of moving rocks or soil layers and the risk of being cut over or otherwise damaged during any form of excavations is not present due to the fact that the coils 56, 57, 58, 59 are placed inside the sedimentation tank 1.

By default, all coils 56, 57, 58, 59 contain only tap water, which removes any serious risk of contamination, as only tap water will escape if there is a leak in one of the coils 56, 57, 58, 59.

In connection with buildings using heat pumps, the invention may be used as follows:
The lower coil 58 is the cooling coil. This means that the liquid flowing therein is used for absorbing excessive heat energy from, for instance, floors, ceilings or cooling panels for later release of the absorbed heat energy to the surrounding water in the lower parts of the sedimentation tank 1. The liquid is cooled as it flows in a downward direction from the beginning of the lower coil 58 towards the bottom of the sedimentation tank 1, after which the cooled liquid is returned to the building part or cooling panel for cooling it again and the circuit resumes.

Depending on the temperature inside the sedimentation tank 1, the intermediate coil 57 and the lower coil 58 may be connected to each other in order to obtain a larger total coil length. Using a larger coil length, the time spent by the liquid in the coils 57, 58 to release heat energy to the surrounding water near the bottom of the sedimentation tank 1 and, thereby, the cooling effect is increased.

The heat-absorbing upper coil 56 is located near the top of the sedimentation tank 1. The liquid within the coil 56 absorbs heat energy from the surrounding water in the sedimentation tank 1 and releases heat energy in the heat pump 13. The liquid, which is cooled by a few degrees on its way through the heat pump 13, returns to the upper coil 56 in the sedimentation tank 1 again to absorb heat energy from the water therein once again.

In traditional geothermal systems, the liquid is heated to a temperature equal to the ground temperature, which easily and often falls below +1° C in the winter season. Compared to this, the inlet temperature for the heat pump 13 is raised significantly by using the upper coil 56 of the present invention for heating the liquid instead.

Depending on the temperature within the sedimentation tank 1, the intermediate coil 57 and or the lower coil 58 can be connected to the upper coil 56 in order to obtain a larger total coil length. Using a larger coil length, the time spent by the liquid in the coils 56, 57, 58 to absorb heat energy from the surrounding water within the sedimentation tank 1 and, thereby, the heating effect is increased.

The operating temperature of the sedimentation tank 1 being primarily affected by the supplied wastewater, more energy may be extracted from the system than is supplied to the system for some periods. If the disposable shunt 50 with its associated disposable coil 59 is connected to an external unit, this may affect the operating temperature positively.

One scenario could be that the building might be left for a week or longer during the heating season. The average temperature within the sedimentation tank 1 will decrease during this period. Of course, there is no load on the hot-water consumption but, on the other hand, no heat energy is added the sedimentation tank 1 as no wastewater is received from the building and, furthermore, heat energy may be drawn out of the sedimentation tank 1 for domestic heating. The sedimentation tank 1 of preferred embodiments of the present invention is dimensioned for this situation. In case of aggravating circumstances, a built-in system prevents any formation of ice and ensures that a minimum operating temperature is kept within the sedimentation tank 1 so that the liquid sent to the heat pump 13 does not reach a critically low temperature level, which might damage the heat pump 13.

This is ensured by sending hot water at a temperature of approximately 55° C from the hot-water tank 15 of the building via a supply pipe 16 to a heat exchanger 18. In this heat exchanger 18, heat energy is exchanged to a liquid flowing in a supply pipe 19 for the cooling control unit 21, through which the hot liquid is led to the cooling shunt 26. From there, the hot liquid continues through a supply pipe 28 and in a downward direction through the lower coil 58, from where heat energy is released to the surrounding water near the bottom of the sedimentation tank 1. From the lower coil 58, the liquid returns to the cooling control 21 and via a return pipe 20 from there back to the heat exchanger 18 to resume the circuit as long as a critically low temperature is measured by the fourth temperature sensor 55, which is placed near the bottom of the sedimentation tank 1.

Thus, the aim is to exchange heat energy from hot water at approximately 55° C into the sedimentation tank 1 for a period until the temperature inside the sedimentation tank 1 is no longer critically low. Because no hot water is used in the building in the given example, this is a much cheaper way to secure a sufficient heat production than using electric power for an electric heating element. Advantageously, the heat pump 13 is priority controlled so that it always gives priority to hot-water production before heating through a heating circuit.

In case the control unit 12 activates the heat exchanger 18, the 3-way valve 24 of the cooling control unit 21 is open only towards the cooling shunt 26 and the 2-way valve 27 of the cooling shunt 26 is open only towards the supply pipe 28 for the lower coil 58. Also, the valve 34 for the second cooling/heating circuit is closed and the 2-way valve 25 of the cooling control unit 21 is open only towards the return pipe 20 from the cooling control unit 21 so that the lower coil 58 changes its status from being a cooling coil to being a heating coil. This function replaces or supplements a traditional backup electric heating element in a hot-water tank.

The liquid flowing through traditional geothermal piping is typically tap water with the addition of a coolant or an antifreeze in the form of, for instance, glycol or alcohol. Alcohol is significantly less harmful to nature than glycol. Coolants and antifreezes are added to the water because the soil around ground heating pipes can freeze, which, if no coolant or antifreeze were added, would result in the creation of ice crystals within the water flowing through the ground heating pipes. Such brash ice can be devastating for any heat pump.

A typical mixture of alcohol and water in geothermal piping is one part of alcohol to two parts of water. The specific heat capacity of this mixture can be calculated to be approximately 3,400 kJ/m³K (i.e. kilojoules per 1,000 liters for every degree the temperature changes). For comparison, the specific heat capacity of tap water is approximately 4,190 kJ/m³K. Thus, the less alcohol used, the better heating/cooling effect is obtained.

Since no temperatures below the freezing point will ever occur in the sedimentation tank 1, the liquid to the heat pump 13 of the present invention can be pure tap water. As the specific heat capacity is greater in tap water than in any mixture of water and alcohol, a smaller amount of water must be pumped through the coils 56, 57, 58, 59 of the present invention to obtain a cooling/heating effect similar to the one of a traditional geothermal cooling/heating system, because each litre of tap water contains more heat energy into the heat pump 13 than would have a litre of tap water mixed with alcohol at the same temperature.

The illustrated embodiment shows a system for cooling a liquid in a closed liquid/liquid heat exchanger system. The system includes a sedimentation tank 1 for wastewater or rainwater having a sewage inlet 3 and a sewage outlet 10 via a clarification well 2. The clarification well comprises a first 8 and a second 9 T-piece outlet valve.

The liquid from the heat pump 13 is fed via a return pipe 31 to a distribution shunt 30, through a valve 32 and a supply pipe 35 for the heating circuit to a heating shunt 49. The two valves 33, 34 for the first and the second cooling/heating circuits, respectively, and the connection 41 between the heating shunt 49 and the cooling/heating shunt 42 are all closed.

From the heating shunt 49, the liquid continues through a 2-way valve 38 and a supply pipe 40 to the upper coil 56 for absorbing heat energy from the surrounding water in the sedimentation tank1. From there, the liquid returns to the heat pump 13 through a return pipe 39.

If more heat energy is extracted from the sedimentation tank 1 than is supplied to it, the control unit 12 sends a signal to the distribution shunt 30 that the liquid needs longer time within the sedimentation tank 1. In this case, the liquid is led from the distribution shunt 30 through a valve 33 for the first cooling/heating circuit and the control unit 12 makes sure that the valve 32 for the heating circuit, the valve 34 for the second cooling/heating circuit and the connection 48 between the cooling/heating shunt 42 and the cooling shunt 26 are all closed. From the valve 33, the liquid continues through a supply pipe 36 for the first cooling/heating circuit, through a 3-way valve 45 of the cooling/heating shunt 42 and through a supply pipe 47 to the intermediate coil 57 for absorbing heat energy from the surrounding water in the sedimentation tank 1.

From the intermediate coil 57, the heated liquid continues through a return pipe 46, the cooling/heating shunt 42, a connection 41 to the heating shunt 49, the 2-way valve 38 of the heating shunt 49 and the supply pipe 40 to the upper coil 56 for being heated further. From there, the liquid returns to the heat pump 13 through a return pipe 39 as described above.

In case the largest possible amount of heat energy is to be extracted from the sedimentation tank 1, the control unit 12 sends a signal to the distribution shunt 30 that the liquid needs as long time as possible within the sedimentation tank 1. In this case, the liquid is led from the distribution shunt 30 through a valve 34 for the second cooling/heating circuit and the control unit 12 makes sure that the valve 32 for the heating circuit, the valve 33 for the first cooling/heating circuit and the two valves 24, 25 for the cooling control unit 21 are all closed. From the valve 34, the liquid continues through a supply pipe 37, through the cooling shunt 26 and through the supply pipe 29 to the lower coil 58 for absorbing heat energy from the surrounding water near the bottom of the sedimentation tank 1.

From the lower coil 58, the heated liquid continues via a return pipe 28, the cooling shunt 26, a connection 48 to the cooling/heating shunt 42 and a supply pipe 47 to the intermediate coil 57 for further heating.

From the intermediate coil 57, the heated liquid continues through a return pipe 46, the cooling/heating shunt 42, a connection 41 to the heating shunt 49, the 2-way valve 38 of the heating shunt 49 and the supply pipe 40 to the upper coil 56 for being heated further. From there, the liquid returns to the heat pump 13 through a return pipe 39 as described above.

The illustrated embodiment shows a system for connection and distribution of liquid to several horizontally extending coils 56, 57, 58, 59 within a sedimentation tank 1. The circuit starts with the liquid coming from the heat pump 13 via return pipe 31 to a distribution shunt 30, which can forward the liquid to one of three different shunts 26, 42, 49. Thus, distribution of liquid to one shunt 26, 42, 49 excludes distribution of liquid to any of the other two shunts 26, 42, 49. In other words, only one of the three valves for the heating circuit 32, for the first cooling/heating circuit 33 and for the second cooling/heating circuit 34, respectively, can be open at any given time. The valve 32 for the heating circuit is open, if the temperature of the liquid passing through the return pipe 31 is higher than the temperature measured by the third temperature sensor 54. In this case, the 2-way valve 38 of the heating shunt 49 closes the connection 41 to the cooling/heating shunt 42, and the liquid flows from the distribution shunt 30 through a supply pipe 35, the heating shunt 49 and another supply pipe 40 to the upper coil 56 for absorbing heat energy from the surrounding water in the sedimentation tank 1. From the upper coil 56, the heated liquid returns to the heat pump through a return pipe 39.

The valve 33 for the first cooling/heating circuit is open, if the temperature of the liquid passing through the return pipe 31 is lower than the temperature measured by the third temperature sensor 54 but higher than the temperature measured by the fourth temperature sensor 55. In this case, the second 3-way valve 45 of the cooling/heating shunt 42 closes the connection 48 to the cooling shunt 26, and the liquid flows from the distribution shunt 30 through a supply pipe 36, the cooling/heating shunt 42 and another supply pipe 47 to the intermediate coil 57 for absorbing heat energy from the surrounding water in the sedimentation tank 1. From the intermediate coil 57, the heated liquid continues through a return pipe 46, the cooling/heating shunt 42, a connection 41 to the heating shunt 49 and a supply pipe 40 to the upper coil 56 for further heating. From the upper coil 56, the heated liquid returns to the heat pump through a return pipe 39.

The valve 34 for the second cooling/heating circuit is open, if the temperature of the liquid passing through the return pipe 31 is lower than the temperature measured by the fourth temperature sensor 55. In this case, the liquid flows from the distribution shunt 30 through a supply pipe 37, the cooling shunt 26 and another supply pipe 29 to the lower coil 58 for absorbing heat energy from the surrounding water near the bottom of the sedimentation tank 1. From the lower coil 58, the heated liquid continues through a return pipe 28, the cooling shunt 26, a connection 48 to the cooling/heating shunt 42 and a supply pipe 47 to the intermediate coil 57 for further heating. From the intermediate coil 57, the heated liquid continues through a return pipe 46, the cooling/heating shunt 42, a connection 41 to the heating shunt 49 and a supply pipe 40 to the upper coil 56 for being heated even further. From the upper coil 56, the heated liquid returns to the heat pump through a return pipe 39.

In buildings heated by district heating, the invention is to be used in a slightly different way as described in the following:
When a heat pump is not part of the system because the building is heated by other means, such as for instance a boiler or district heating, a preheating unit 60 is an active part of the system. On the other hand, a number of elements 13, 14, 15, 16, 17, 18, 19, 20, 30, 31, 32, 33, 34, 35, 36, 37, 38, 41, 49 and all functionalities related to these elements are not part of the system. All coils 56, 57, 58, 59 are still active exploiting the thermal stratification within the sedimentation tank 1.

The lower coil 58 is the cooling coil. This means that the liquid flowing therein is used for absorbing excessive heat energy from, for instance, floors, ceilings or cooling panels for later release of the absorbed heat energy to the surrounding water in the lower parts of the sedimentation tank 1. The liquid is cooled as it flows in a downward direction from the beginning of the lower coil 58 towards the bottom of the sedimentation tank 1, after which the cooled liquid is returned to the building part or cooling panel for cooling it again and the circuit resumes.

Depending on the temperature inside the sedimentation tank 1, the intermediate coil 57 and the lower coil 58 may be connected to each other in order to obtain a larger total coil length. Using a larger coil length, the time spent by the liquid in the coils 57, 58 to release heat energy to the surrounding water near the bottom of the sedimentation tank 1 and, thereby, the cooling effect is increased.

Now, how is heat energy extracted from the sedimentation tank 1 when the building does not have a heat pump 13 but is heated by district heating?

When no heat pump 13 is part of the system, the upper coil 56 is used as a preheating circuit for cold tap water using a preheating unit 60, which is connected to a tap water supply. The cold tap water reaches the preheating unit 60 through an inlet 64 for cold tap water 64. From the preheating unit 60, the cold tap water continues through a couple of supply pipes 63, 40 to the upper coil 56 for absorbing heat energy from the surrounding water in the sedimentation tank 1. From the upper coil 56, the preheated tap water returns to the preheating unit 60 through a return pipe 39 and a supply pipe 62 before it continues through yet another supply pipe 61 to the heating system of the building.

Thus, the preheating unit 60 is used for preheating cold tap water before it heated by a boiler or a heating system to be used as hot domestic water. Advantageously, the preheating unit 60 is used for appliances (toilets, washing machines, dishwashers), which almost certainly contributes with an amount of heat energy that increases the temperature of the wastewater in the sedimentation tank 1 around the upper coil 56 more than the tap water inside the upper coil 56 can decrease the same temperature within a limited period of time.

For instance, tap water for flushing toilets can be preheated in the upper coil 56 within the sedimentation tank 1, whereby the heat energy "contribution" to the toilet is going to contribute to an even higher temperature of the wastewater within the sedimentation tank 1. Another example is a dishwasher or a washing machine, the electrical heating element of which needs less electric power to raise the temperature of the tap water if it has already been preheated using the preheating circuit of the invention as described above. When the temperature of the tap water has been raised further by means of electrical heating element, the wastewater from such appliances returns to the sedimentation tank 1 with a positive temperature boost. Because toilets, washing machines and dishwashers are not heavy users of tap water, the time spent by the tap water within the upper coil 56 is relatively long.

The temperature of the tap water inside the last part of the upper coil 56 does not differ significantly from the temperature of the wastewater surrounding the coil 56. The tap water flows in an upward direction from the supply pipe 63 for the preheating circuit, through the upper coil 56 where it absorbs heat energy from the surrounding water in the sedimentation tank1 before it continues back to the preheating unit 62 and further on to the appliance via the supply pipe 61.

The disposable shunt 50 with the associated disposable coil 59 can be used to extract the last heat energy from return water from a district heating system, which can no longer be used as hot domestic water. If, for instance, the district heating water arrives to the building at about 65° C, the return water can typically have a temperature of about 30° C.

Typically, 30° C is too little for supply water for floor heating systems and it is certainly not enough for the water to be used as hot domestic water. Therefore, relatively hot water is returned to the district heating plant although the plant prefers to receive as cold return water as possible in order to obtain a better and more cost efficient operation. The better the household is able to make use of the heat energy in the water from the district heating and make sure that the return water is as cold as possible, the more the consumer is "awarded" when the accounts are settled.

In the above example, if the return water for the district heating is sent through the disposable shunt 50 and the associated disposable coil 59, a temperature of approximately 30° C near the end of the coil is obtained, and the district heating water is cooled before it is returned to the plant for the benefit not only of the plant operation but also of the consumer when he is billed for the district heating.

The combination of the preheating unit 60 and the disposable shunt 50 is particularly suitable for buildings using district heating and/or facilities including a hot-water tank 15.

If, for instance, the cold water is divided into two strands in a monitoring well before reaching the sedimentation tank 1, one strand can go directly to the taps in a building with cold water, whereas the water in the other strand is preheated in the upper coil 56 of the sedimentation tank 1 of the present invention.

From the upper coil 56, the preheated water is fed to the district heating heat exchanger, in which the water is heated even further, for instance from approximately 25° C to approximately 55° C. It is significantly cheaper to heat the water from 25° C to 55° C than from 6°C to 55° C. Because the hot wastewater, which is led to the sedimentation tank 1, for instance from the drain under a shower, typically has a temperature of at least 38° C, heat energy is supplied to the sedimentation tank 1 while cold water is flowing through the upper coil 56 for being preheated. Thus, when hot water is used, the cold water is preheated at the same time.

In some countries, for instance in Denmark, it is not legal to preheat water before it reaches the district heating heat exchanger due to fear of growth of the Legionella bacterium. If this law is changed or an effective way of controlling Legionella is found, the general district heating consumer will be able to reduce his costs to district heating significantly, because he will be able to feed the district heating heat exchanger with water at, for instance, about 25° C instead of 6° C, which is the normal temperature of cold tap water. This will reduce the power consumption for heating water significantly.

Pending a solution to the problems related to Legionella in hot water, the preheated tap water cannot be used as hot domestic water in general but is limited to be used in appliances such as dishwashers, washing machines and toilets. Theoretically, the water in a toilet cools the air in the bathroom or, the other way around, the bathroom heating uses energy to heat 3-9 litres of water in the toilet. This negative effect is reduced if the toilet water is preheated.

### List of reference numbers

1. Sedimentation tank
2. Clarification well
3. Sewage inlet
4. First temperature sensor
5. Sewer bypass
6. T-piece for first inlet
7. T-piece for second inlet
8. First T-piece outlet valve
9. Second T-piece outlet valve
10. Sewage outlet
11. Safety valve
12. Control unit
13. Heat pump
14. Supply pipe for hot-water tank
15. Hot-water tank
16. Supply pipe for heat exchanger
17. Return pipe from heat exchanger
18. Heat exchanger
19. Supply pipe for cooling control
20. Return pipe from cooling control
21. Cooling control unit
22. Return pipe from cooling circuit
23. Supply pipe for cooling circuit
24. 3-way valve of cooling control
25. 2-way valve of cooling control
26. Cooling shunt
27. 2-way valve of cooling shunt
28. Supply/return pipe for lower coil
29. Return/supply pipe from lower coil
30. Distribution shunt
31. Return pipe from heat pump
32. Valve for heating circuit
33. Valve for first cooling/heating circuit
34. Valve for second cooling/heating circuit
35. Supply pipe for heating circuit
36. Supply pipe for first cooling/heating circuit
37. Supply pipe for second cooling/heating circuit
38. 2-way valve of heating shunt
39. Return pipe from heating circuit
40. Supply pipe for heating circuit
41. Connection between heating shunt and cooling/heating shunt
42. Cooling/heating shunt
43. Supply pipe for cooling/heating shunt
44. First 3-way valve of cooling/heating shunt
45. Second 3-way valve of cooling/heating shunt
46. Supply/return pipe for intermediate circuit
47. Return/supply pipe for intermediate circuit
48. Connection between cooling/heating shunt and cooling shunt
49. Heating shunt
50. Disposable shunt
51. Supply pipe for disposable shunt
52. Return pipe from disposable shunt
53. Second temperature sensor
54. Third temperature sensor
55. Fourth temperature sensor
56. Upper coil
57. Intermediate coil
58. Lower coil
59. Disposable coil
60. Preheating unit
61. Supply pipe for heating system
62. Supply pipe for preheating unit
63. Supply pipe for preheating circuit
64. Inlet for cold tap water
65. Cleaning hatch/Manhole
66. Long outlet pipe
67. Short outlet pipe

## Claims

1. A system for cooling and/or heating of a liquid in a closed liquid/liquid heat exchanger system, the system comprising a sedimentation tank (1) for detaining through-flowing water in the form of wastewater or rainwater,
wherein a natural thermal stratification in the sedimentation tank (1) is utilised by means of an upper coil (56), an intermediate coil (57) and a lower coil (58), which are placed in different horizontal layers of the sedimentation tank (1), respectively, and each contains a liquid in the form of tap water, demineralised water or water mixed with a coolant,
wherein the system can be configured in different ways so that, in a first configuration of the system, each of the three coils (56, 57, 58) is arranged to exchange heat energy between the water in the sedimentation tank (1) and the liquid inside the coil (56, 57, 58) separately and independently of the other coils,
in a second configuration of the system, in order to obtain a larger coil length and, thereby, a longer time for exchanging heat energy with the water near the top of the sedimentation tank (1) or with the water near the bottom of the sedimentation tank (1), two of the three coils (56, 57, 58) are arranged in continuation of one another by connecting the intermediate coil (57) either to the upper coil (56) or to the lower coil (58), and
in a third configuration of the system, all three coils (56, 57, 58) are arranged in continuation of one another by connecting the intermediate coil (57) both to the upper coil (56) and to the lower coil (58) so that the same liquid flows through all three coils (56, 57, 58), and
wherein, in the first and second configurations of the system, it is configured to be able to heat a liquid flowing upward through the upper coil and, at the same time, cool another liquid flowing downward through the lower coil using the same environment.

2. The system according to claim 1, wherein a cooling control unit (21) is arranged to receive a signal representing a need for cooling of a building or a part of a building and to control the system in accordance with the received signal,
so that, in case of a limited need for cooling, liquid is led through the lower coil (58) for being cooled by the surrounding water in the sedimentation tank (1) and afterwards passed through the cooling control unit (21) to a supply pipe (23) for a cooling circuit inside the building to be cooled,
and, in case the need for cooling is larger, the intermediate coil (57) and the lower coil (58) are connected to each other, and liquid is led through the intermediate coil (57) and further through the lower coil (58) for being cooled by the surrounding water in the sedimentation tank (1) and afterwards passed through the cooling control unit (21) to a supply pipe (23) for a cooling circuit inside the building to be cooled,
in both of which cases, the liquid flowing in the cooling circuit provides cooling to the building by absorbing heat energy from the building, which heat energy is, in turn, released to the water in the sedimentation tank (1) when the liquid returns thereto from the cooling circuit.

3. The system according to claim 1 or 2, wherein a distribution shunt (30) is arranged to receive a signal from a control unit (12), which signal indicates whether a liquid to be received by a heat pump (13) should be passed through
the upper coil (56) alone,
the intermediate coil (57) and the upper coil (56) being connected to each other, or
the lower coil (58), the intermediate coil (57) and the upper coil (56), the intermediate coil (57) connecting the lower coil (58) and the upper coil (56),
for being heated by the surrounding water in the sedimentation tank (1) before reaching the heat pump (13),
the control unit (12) using measurements by a second (53), a third (54) and a fourth (55) temperature sensor detecting the water temperatures in different thermal layers, respectively, of the sedimentation tank (1) for controlling the distribution shunt (30) and, thereby, through how many of the coils (56, 57, 58) the liquid must flow in an upward direction in order to absorb as much heat energy as possible from the water in the sedimentation tank (1)
while at the same time avoiding any unnecessary cooling of the water in the sedimentation tank (1) by the liquid returning from the heat pump (13).

4. The system according to any of the preceding claims, wherein a disposable shunt (50) is arranged to be used for cooling of liquid from external devices, such as solar cell coolants or return water from solar heating or district heating systems, by letting the liquid flow through a disposable coil (59) in a downward direction, provided that the temperature measured by the second temperature sensor (53) is lower than the temperature of the liquid in the disposable coil (59), which is measured in the disposable shunt (50).

5. The system according to any of the preceding claims, wherein, provided that a temperature below +4 degrees centigrade is measured by the third temperature sensor (54), a liquid is led from a hot-water tank (15), through a supply pipe (16) for a heat exchanger (18), through the heat exchanger (18) and in a downward direction through the lower coil (58) for exchanging heat energy with the colder surrounding water in the sedimentation tank (1) before it returns to the hot-water tank (15).

6. The system according to any of the preceding claims, further comprising a clarification well (2) with a first (8) and a second (9) built-in T-piece outlet valve, which valves are arranged to be used for controlling whether the water from the clarification well (2) is to leave the sedimentation tank (1) via a long outlet pipe (66) or via a short outlet pipe (67), respectively, before reaching a sewage outlet (10).

7. The system according to any of the preceding claims, further comprising a first temperature sensor (4) for obtaining an optimal distribution of the wastewater entering the sedimentation tank (1),
wherein, in case the temperature measured by the first temperature sensor (4) is higher than the temperature measured by the second temperature sensor (53), a sewer bypass (5) closes for a T-piece (6) for a first inlet and the wastewater is led to a T-piece (7) for a second inlet for entering the inside of the sedimentation tank (1) through the second inlet,
whereas, in case the temperature measured by the first temperature sensor (4) is lower than the temperature measured by the second temperature sensor (53), the sewer bypass (5) opens for the T-piece (6) for the first inlet and the wastewater is led to the inside of the sedimentation tank (1) through the first inlet.

8. The system according to any of the preceding claims, wherein the liquid flowing through the upper (56), the intermediate (57), the lower (58) and/or the disposable coil (59) contains an antifreeze/coolant diluted with tap water or demineralised water or tap water.

9. The system according to any of the preceding claims, wherein the upper coil (56) is arranged to be used as a preheating circuit for cold tap water by means of a preheating unit (60) connected to a tap water conduit, so that the cold tap water can be led in an upward direction through the upper coil (56) for absorbing heat energy from the surrounding water in the sedimentation tank (1) before being sent as preheated tap water through a supply pipe (61) for a heating system of a building.

## Patentansprüche

1. System zum Kühlen und/oder Erwärmen einer Flüssigkeit in einem geschlossenen Flüssig/Flüssig-Wärmetauschersystem, das System ein Sedimentationstank (1) zum Rückhalten von durchfließendem Wasser in Form von Abwasser oder Regenwasser umfassend,
wobei eine natürliche thermische Schichtung im Sedimentationstank (1) durch eine obere Spule (56), eine mittlere Spule (57) und eine untere Spule (58) genutzt wird, die jeweils in verschiedenen horizontalen Schichten des Sedimentationstanks (1) platziert sind und jeweils eine Flüssigkeit in Form von Leitungswasser, entmineralisiertem Wasser oder mit einem Kühlmittel gemischtem Wasser enthalten, wobei das System auf unterschiedliche Weise konfiguriert werden kann, so dass in einer ersten Konfiguration des Systems jede der drei Spulen (56, 57, 58) angeordnet ist, um separat und unabhängig von den anderen Spulen Wärmeenergie zwischen dem Wasser in dem Sedimentationstank (1) und der Flüssigkeit im Inneren der Spule (56, 57, 58) auszutauschen,
in einer zweiten Konfiguration des Systems, um eine größere Spulenlänge und dadurch eine längere Zeit für den Austausch von Wärmeenergie mit dem Wasser nahe der Oberseite des Sedimentationstanks (1) oder mit dem Wasser nahe der Unterseite des Sedimentationstanks (1) zu erlangen, zwei der drei Spulen (56, 57, 58) durch Verbinden der mittleren Spule (57) entweder mit der oberen Spule (56) oder mit der unteren Spule (58) in Fortsetzung zueinander angeordnet sind, und
in einer dritten Konfiguration des Systems, alle drei Spulen (56, 57, 58) durch Verbinden der mittleren Spule (57) sowohl mit der oberen Spule (56) als auch mit der unteren Spule (58) in Fortsetzung zueinander angeordnet sind, so dass dieselbe Flüssigkeit durch alle drei Spulen (56, 57, 58) fließt, und
wobei das System in der ersten und zweiten Konfiguration so konfiguriert ist, dass es in der Lage ist, eine durch die obere Spule aufwärts fließende Flüssigkeit zu erhitzen und gleichzeitig eine andere, durch die untere Spule abwärts fließende Flüssigkeit unter Verwendung derselben Umgebung zu kühlen.

2. Das System nach Anspruch 1, wobei eine Kühlungssteuereinheit (21) angeordnet ist, um ein Signal zu empfangen, das einen Kühlungsbedarf eines Gebäudes oder eines Gebäudeteils darstellt, und das System gemäß des empfangenen Signals zu steuern,
so dass im Falle eines begrenzten Kühlbedarfs Flüssigkeit durch die untere Spule (58) geleitet wird, um durch das umgebende Wasser im Sedimentationstank (1) gekühlt zu werden, und anschließend durch die Kühlsteuereinheit (21) zu einer Versorgungsleitung (23) für einen Kühlkreislauf innerhalb des zu kühlenden Gebäudes geleitet wird,
und im Falle eines größeren Kühlbedarfs die mittlere Spule (57) und die untere Spule (58) miteinander verbunden sind und Flüssigkeit durch die mittlere Spule (57) und weiter durch die untere Spule (58) geleitet wird, um durch das umgebende Wasser im Sedimentationstank (1) gekühlt zu werden, und anschließend durch die Kühlungssteuereinheit (21) zu einer Versorgungsleitung (23) für einen Kühlkreislauf innerhalb des zu kühlenden Gebäudes geleitet wird,
in beiden Fällen stellt die im Kühlkreislauf fließende Flüssigkeit eine Kühlung des Gebäudes bereit, indem sie Wärmeenergie aus dem Gebäude aufnimmt, die wiederum an das Wasser im Sedimentationstank (1) abgegeben wird, wenn die Flüssigkeit aus dem Kühlkreislauf dorthin zurückkehrt.

3. Das System nach Anspruch 1 oder 2, wobei ein Verteiler-Nebenschluss (30) angeordnet ist, um ein Signal von einer Steuereinheit (12) zu empfangen, das anzeigt, ob eine von einer Wärmepumpe (13) aufzunehmende Flüssigkeit
ausschließlich durch die obere Spule (56),
die mittlere Spule (57) und die obere Spule (56) miteinander verbunden, oder
die untere Spule (58), die mittlere Spule (57) und die obere Spule (56), wobei die mittlere Spule (57) die untere Spule (58) und die obere Spule (56) verbindet, geleitet werden soll,
um durch das umgebende Wasser im Sedimentationstank (1) erwärmt zu werden, bevor es zu der Wärmepumpe (13) gelangt,
die Steuereinheit (12) Messungen eines zweiten (53), eines dritten (54) und eines vierten (55) Temperatursensors verwendet, die jeweils die Wassertemperatur in verschiedenen Wärmeschichten des Sedimentationstanks (1) erfassen, um den Verteiler-Nebenschluss (30) zu steuern und dadurch zu bestimmen, durch wie viele der Spulen (56, 57, 58) die Flüssigkeit in einer Aufwärtsrichtung fließen muss, um so viel Wärmeenergie wie möglich aus dem Wasser im Sedimentationstank (1) zu absorbieren, wobei gleichzeitig ein unnötiges Abkühlen des Wassers im Sedimentationstank (1) durch die von der Wärmepumpe (13) zurückfließende Flüssigkeit vermieden wird.

4. Das System nach einem der vorhergehenden Ansprüche, wobei ein Einweg-Nebenschluss (50) so angeordnet ist, dass er zum Kühlen von Flüssigkeit aus externen Vorrichtungen, wie Solarzellen-Kühlmittel oder Rücklaufwasser aus Solar- oder Fernwärmesystemen, verwendet werden kann, indem er die Flüssigkeit durch eine Einweg-Spule (59) in einer Abwärtsrichtung fließen lässt, vorausgesetzt, dass die von dem zweiten Temperatursensor (53) gemessene Temperatur niedriger ist als die Temperatur der Flüssigkeit in der Einweg-Spule (59), die in dem Einweg-Nebenschluss (50) gemessen wird.

5. Das System nach einem der vorhergehenden Ansprüche, wobei, vorausgesetzt, dass der dritte Temperatursensor (54) eine Temperatur von unter +4 Grad Celsius misst, eine Flüssigkeit von einem Warmwassertank (15) durch eine Versorgungsleitung (16) für einen Wärmetauscher (18), durch den Wärmetauscher (18) in einer Abwärtsrichtung durch die untere Spule (58) geleitet wird, um Wärmeenergie mit dem kälteren umgebenden Wasser im Sedimentationstank (1) auszutauschen, bevor sie zum Warmwassertank (15) zurückkehrt.

6. Das System nach einem der vorhergehenden Ansprüche, ferner umfassend einen Klärbrunnen (2) mit einem ersten (8) und einem zweiten (9) eingebauten T-Stück-Auslassventil, wobei die Ventile so angeordnet sind, dass sie zum Steuern dienen, ob das Wasser aus dem Klärbrunnen (2) den Sedimentationstank (1) über ein langes Auslassrohr (66) oder über ein kurzes Auslassrohr (67) verlassen soll, bevor es einen Abwasserauslass (10) erreicht.

7. Das System nach einem der vorhergehenden Ansprüche, ferner umfassend einen ersten Temperatursensor (4) zum Erlangen einer optimalen Verteilung des in den Sedimentationstank (1) eintretenden Abwassers,
wobei für den Fall, dass die von dem ersten Temperatursensor (4) gemessene Temperatur höher ist als die von dem zweiten Temperatursensor (53) gemessene Temperatur, ein Abwasser-Bypass (5) für ein T-Stück (6) für einen ersten Einlass geschlossen wird und das Abwasser zu einem T-Stück (7) für einen zweiten Einlass geleitet wird, um durch den zweiten Einlass in das Innere des Sedimentationstanks (1) zu gelangen,
wobei für den Fall, dass die von dem ersten Temperatursensor (4) gemessene Temperatur niedriger ist als die von dem zweiten Temperatursensor (53) gemessene Temperatur, sich der Abwasser-Bypass (5) für das T-Stück (6) für den ersten Einlass öffnet, und das Abwasser durch den ersten Einlass in das Innere des Sedimentationstanks (1) geleitet wird.

8. Das System nach einem der vorhergehenden Ansprüche, wobei die Flüssigkeit, die durch die obere (56), die mittlere (57), die untere (58) und/oder die Einweg-Spule (59) fließt, ein mit Leitungswasser oder entmineralisiertem Wasser verdünntes Frostschutzmittel/Kühlmittel oder Leitungswasser enthält.

9. Das System nach einem der vorhergehenden Ansprüche, wobei die obere Spule (56) so angeordnet ist, dass sie als Vorwärmkreislauf für kaltes Leitungswasser mittels einer Vorwärmeinheit (60) verwendet werden kann, die mit einer Leitungswasserleitung verbunden ist, so dass das kalte Leitungswasser in einer Aufwärtsrichtung durch die obere Spule (56) geleitet werden kann, um Wärmeenergie aus dem umgebenden Wasser in dem Sedimentationstank (1) zu absorbieren, bevor es als vorgewärmtes Leitungswasser durch eine Versorgungsleitung (61) für ein Heizungssystem eines Gebäudes geschickt wird.

## Revendications

1. Système de refroidissement et/ou de chauffage d'un liquide dans un système d'échangeur de chaleur liquide/liquide fermé, le système comprenant un bassin de décantation (1) destiné à retenir une eau s'écoulant sous forme d'eaux usées ou d'eaux pluviales,
dans lequel une stratification thermique naturelle dans le bassin de décantation (1) est utilisée au moyen d'une bobine supérieure (56), d'une bobine intermédiaire (57) et d'une bobine inférieure (58), disposées respectivement dans différentes couches horizontales du bassin de décantation (1) et contenant chacune un liquide sous forme d'eau du robinet, d'eau déminéralisée ou d'eau mélangée à un fluide caloporteur,
dans lequel le système peut être configuré de différentes manières, de sorte que, dans une première configuration du système, chacune des trois bobines (56, 57, 58) est agencée pour échanger de l'énergie thermique entre l'eau du bassin de décantation (1) et le liquide à l'intérieur de la bobine (56, 57, 58) séparément et indépendamment des autres bobines,
dans une deuxième configuration du système, afin d'obtenir une longueur de bobine plus grande et, par conséquent, un temps d'échange thermique plus long avec l'eau à proximité du sommet du bassin de décantation (1) ou avec l'eau à proximité du fond du bassin de décantation (1), deux des trois bobines (56, 57, 58) sont agencées en continuité l'une de l'autre en reliant la bobine intermédiaire (57) soit à la bobine supérieure (56), soit à la bobine inférieure (58), et
dans une troisième configuration du système, les trois bobines (56, 57, 58) sont agencées en continuité l'une de l'autre en reliant la bobine intermédiaire (57) à la fois à la bobine supérieure (56) et à la bobine inférieure (58) de sorte que le même liquide traverse les trois bobines (56, 57, 58), et
dans lequel, dans les première et deuxième configurations du système, il est configuré pour chauffer un liquide s'écoulant vers le haut à travers la bobine supérieure et, simultanément, refroidir un autre liquide s'écoulant vers le bas à travers la bobine inférieure en utilisant le même milieu.

2. Système selon la revendication 1, dans lequel une unité de commande de refroidissement (21) est agencée pour recevoir un signal représentant un besoin de refroidissement d'un bâtiment ou d'une partie de bâtiment et pour commander le système conformément au signal reçu,
de sorte qu'en cas de besoin de refroidissement limité, un liquide est conduit à travers la bobine inférieure (58) pour être refroidi par l'eau environnante dans le bassin de décantation (1), puis acheminé à travers l'unité de commande de refroidissement (21) vers une conduite d'alimentation (23) d'un circuit de refroidissement à l'intérieur du bâtiment à refroidir,
et qu'en cas de besoin de refroidissement plus élevé, la bobine intermédiaire (57) et la bobine inférieure (58) sont reliées entre elles, et un liquide est conduit à travers la bobine intermédiaire (57) puis à travers la bobine inférieure (58) pour être refroidi par l'eau environnante dans le bassin de décantation (1), puis acheminé à travers l'unité de commande de refroidissement (21) vers une conduite d'alimentation (23) d'un circuit de refroidissement à l'intérieur du bâtiment à refroidir,
dans les deux cas, le liquide circulant dans le circuit de refroidissement assurant le refroidissement du bâtiment en absorbant de l'énergie thermique du bâtiment, laquelle est à son tour cédée à l'eau du bassin de décantation (1) lorsque le liquide y revient depuis le circuit de refroidissement.

3. Système selon la revendication 1 ou 2, dans lequel un shunt de distribution (30) est agencé pour recevoir un signal d'une unité de commande (12), lequel signal indique si un liquide destiné à être reçu par une pompe à chaleur (13) doit être acheminé
uniquement à travers la bobine supérieure (56),
à travers la bobine intermédiaire (57) et la bobine supérieure (56) reliées entre elles, ou
à travers la bobine inférieure (58), la bobine intermédiaire (57) et la bobine supérieure (56), la bobine intermédiaire (57) reliant la bobine inférieure (58) et la bobine supérieure (56), afin d'être réchauffé par l'eau environnante dans le bassin de décantation (1) avant d'atteindre la pompe à chaleur (13),
l'unité de commande (12) utilisant des mesures d'un deuxième (53), d'un troisième (54) et d'un quatrième (55) capteur de température détectant respectivement les températures de l'eau dans différentes couches thermiques du bassin de décantation (1) pour commander le shunt de distribution (30) et, ainsi, déterminer à travers combien des bobines (56, 57, 58) le liquide doit s'écouler vers le haut afin d'absorber autant d'énergie thermique que possible de l'eau du bassin de décantation (1) tout en évitant un refroidissement inutile de l'eau du bassin de décantation (1) par le liquide revenant de la pompe à chaleur (13).

4. Système selon l'une quelconque des revendications précédentes, dans lequel une dérivation jetable (50) est agencée pour être utilisée pour le refroidissement d'un liquide provenant de dispositifs externes, tels que des circuits de refroidissement de panneaux solaires ou de l'eau de retour provenant de systèmes de chauffage solaire ou de chauffage urbain, en laissant le liquide s'écouler à travers une bobine jetable (59) dans une direction descendante, à condition que la température mesurée par le deuxième capteur de température (53) soit inférieure à la température du liquide dans la bobine jetable (59), qui est mesurée dans la dérivation jetable (50).

5. Système selon l'une quelconque des revendications précédentes, dans lequel, à condition qu'une température inférieure à +4°C soit mesurée par le troisième capteur de température (54), un liquide est amené d'un réservoir d'eau chaude (15), à travers une conduite d'alimentation (16) d'un échangeur de chaleur (18), à travers l'échangeur de chaleur (18) puis, dans une direction descendante, à travers la bobine inférieure (58) pour échanger de l'énergie thermique avec l'eau environnante plus froide dans le bassin de décantation (1) avant de retourner au réservoir d'eau chaude (15).

6. Système selon l'une quelconque des revendications précédentes, comprenant en outre un puits de clarification (2) doté d'une première (8) et d'une deuxième (9) vanne de sortie à pièce en T intégrée, lesquelles vannes sont agencées pour être utilisées pour commander si l'eau provenant du puits de clarification (2) doit quitter le bassin de décantation (1) respectivement à travers une conduite de sortie longue (66) ou à travers une conduite de sortie courte (67) avant d'atteindre une sortie d'égout (10).

7. Système selon l'une quelconque des revendications précédentes, comprenant en outre un premier capteur de température (4) pour obtenir une répartition optimale des eaux usées entrant dans le bassin de décantation (1),
dans lequel, lorsque la température mesurée par le premier capteur de température (4) est supérieure à la température mesurée par le deuxième capteur de température (53), une dérivation d'égout (5) se ferme vers une pièce en T (6) d'une première entrée et les eaux usées sont dirigées vers une pièce en T (7) d'une deuxième entrée afin de pénétrer à l'intérieur du bassin de décantation (1) à travers la deuxième entrée, tandis que, lorsque la température mesurée par le premier capteur de température (4) est inférieure à la température mesurée par le deuxième capteur de température (53), la dérivation d'égout (5) s'ouvre vers la pièce en T (6) d'une première entrée et les eaux usées sont dirigées vers l'intérieur du bassin de décantation (1) à travers la première entrée.

8. Système selon l'une quelconque des revendications précédentes, dans lequel le liquide s'écoulant à travers la bobine supérieure (56), la bobine intermédiaire (57), la bobine inférieure (58) et/ou la bobine jetable (59) contient un antigel/fluide caloporteur dilué dans de l'eau du robinet ou de l'eau déminéralisée ou de l'eau du robinet.

9. Système selon l'une quelconque des revendications précédentes, dans lequel la bobine supérieure (56) est agencée pour être utilisée comme circuit de préchauffage pour de l'eau froide du robinet au moyen d'une unité de préchauffage (60) reliée à une conduite d'eau du robinet, de sorte que l'eau froide du robinet puisse être acheminée vers le haut à travers la bobine supérieure (56) afin d'absorber de l'énergie thermique provenant de l'eau environnante dans le bassin de décantation (1) avant d'être envoyée, en tant qu'eau du robinet préchauffée à travers une conduite d'alimentation (61) vers un système de chauffage d'un bâtiment.
